# EUROPEAN PATENT APPLICATION

(11) **EP 4 109 371 A1**
(43) Date of publication of application: **28.12.2022**
(21) Application number: 21760535.1
(22) Date of filing: 25.02.2021
(51) Int. Cl.: G06Q 20/32, G06Q 20/28, G06Q 20/40

(54) **VEHICLE-DRIVING-RELATED PAYMENT SYSTEM, AND METHOD THEREFOR**

(30) Priority: 25.02.2020 KR 20200022991
(71) Applicant: Harexinfotech Inc., Seoul 06632 (KR)
(72) Inventor: PARK, Kyung Yang, Seoul 03035 (KR)
(74) Representative: Sander, Rolf
(86) International application number: PCT/KR2021/002340
(87) International publication number: WO 2021/172878

(57) **Abstract**

The present invention relates to a payment system for an occurring cost that is related to vehicle driving, and a method therefor. A vehicle-driving-related payment server, according to the present invention, comprises: an input unit for receiving vehicle recognition information; memory having stored therein a program for processing payment for a cost related to vehicle driving, according to the vehicle recognition information; and a processor for running the program, wherein the processor transmits payment push for the cost related to vehicle driving, confirms whether an application is installed on a valid mobile terminal, and processes a payment process for the cost related to vehicle driving.

## Description

### [Technical Field]

The present disclosure relates to a payment system for a cost that occurs in relation to vehicle driving and a method therefor.

### [Background Art]

Costs that occur in relation to vehicle driving include a road charge, a cost for refueling, a parking fee, etc.

In general, a fare collection method for a vehicle that passes through a toll road is manually performed by a fee collector who is manned in a tollgate or performed by applying a high-pass fare collection technology.

However, if the fee collector is manned, there are problems in that a tie-up is caused upon passage through the tollgate in addition to manpower consumption and expenses occur because a separate terminal needs to be installed for the high-pass fare collection technology.

Furthermore, there is a problem in that a separate collection procedure is required in order to receive an unpaid fare because the unpaid fare may occur due to a cause, such as a failure of a high-pass terminal, a communication failure, or an insufficient prepaid card balance.

### [DISCLOSURE]

### [Technical Problem]

The present disclosure has been proposed to solve the aforementioned problems, and an object of the present disclosure is to provide a payment system and method related to vehicle driving, which enables a fare to be paid even without purchasing/installing a separate high-pass terminal, etc. and can reduce the occurrence of an unpaid fare by enabling the recognition of a license plate number and pre-approval/automatic payment/unpaid fare payment based on a user mobile terminal.

### [Technical Solution]

A payment server related to vehicle driving according to the present disclosure includes an input unit configured to receive vehicle recognition information, a memory in which a program for processing the payment of vehicle driving-related costs based on the vehicle recognition information has been stored, and a processor configured to execute the program. The processor is configured to transmit a payment push for the vehicle driving-related costs, identify whether an application has been installed in a legitimate mobile terminal, and process a payment process for the vehicle driving-related costs.

The processor processes the payment process by using pre-registered payment means through no-signature personal authentication.

The processor registers a license plate number when personal identification using the mobile terminal and personal identification for the payment means are completed.

The processor transmits the payment push after checking a driving completion state.

The processor calculates expected costs when receiving a prepayment request through the mobile terminal and performs prepayment processing.

The processor calculates the expected costs by applying a pre-set discount rate in response to the prepayment request.

A payment method related to vehicle driving according to the present disclosure includes (a) performing personal identification using a mobile terminal and personal identification for the registration of payment means, (b) performing the registration of a license plate number, and (c) when the license plate number registered at step (b) is recognized and vehicle driving-related costs occurs, performing automatic payment by using the pre-registered payment means.

The step (c) includes calculating costs according to a driving path as the vehicle driving-related costs based on the recognition of the license plate number, transmitting a push message to the mobile terminal and driving an application so that verification for the application is performed, performing automatic payment based on a check of contents of payment approval, and then transmits a push for a completion of the automatic payment to the mobile terminal.

The step (c) includes transmitting, to the mobile terminal, a non-payment push including information on a reason for non-payment and a non-payment amount when the automatic payment fails.

The step (c) includes, when receiving a prepayment request according to search for a driving path, calculating the vehicle driving-related costs by applying a pre-set discount rate, and performing approval processing on the prepayment request by using the pre-registered payment means.

### [Advantageous Effects]

According to an embodiment of the present disclosure, there are effects in that a high-pass terminal does not need to be installed in a vehicle and the occurrence of an unpaid fare can be minimized because the recognition of a license plate number and prepayment/automatic payment/unpaid fare payment for a fare related to vehicle driving are possible based on a user mobile terminal.

Effects of the present disclosure are not limited to the aforementioned effect, and other effects not described above may be evidently understood by those skilled in the art from the following description

### [Description of Drawings]

FIG. 1 illustrates a payment system related to vehicle driving according to an embodiment of the present disclosure.
FIG. 2 illustrates a server of the payment system related to vehicle driving according to an embodiment of the present disclosure.
FIG. 3 illustrates a payment method related to vehicle driving according to an embodiment of the present disclosure.

### [Best Mode]

The aforementioned object, other objects, advantages, and characteristics of the present disclosure and a method for achieving the objects, advantages, and characteristics will be clearly described through the following embodiments with reference to the accompanying drawings.

However, the present disclosure is not limited to embodiments disclosed hereinafter, but may be implemented in various different forms. The following embodiments are merely provided to easily notify a person having ordinary knowledge in the art to which the present disclosure pertains of an object, construction, and effects of the present disclosure. The scope of right of the present disclosure is defined by the writing of the claims.

Meanwhile, terms used in this specification are used to describe embodiments and are not intended to limit the present disclosure. In this specification, an expression of the singular number includes an expression of the plural number unless clearly defined otherwise in the context. The term "comprises" and/or "comprising" used in this specification does not exclude the presence or addition of one or more other elements, steps and/or devices in addition to mentioned elements, steps and/or devices.

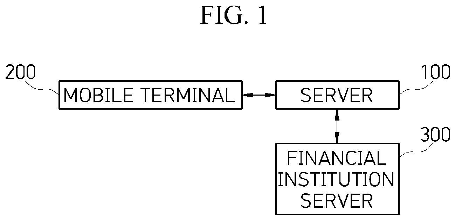

FIG. 1 illustrates a payment system related to vehicle driving according to an embodiment of the present disclosure.

A mobile terminal 200 is a smartphone, etc. that is possessed by a person who gets in a vehicle. When personal identification using the mobile terminal 200 and personal identification for payment means are completed, the mobile terminal 200 registers a license plate number through an application.

According to an embodiment of the present disclosure, the payment of vehicle driving-related costs is performed by pre-designated payment means. In this case, the payment is performed through an automatic billing and approval process before a user denies the payment.

That is, the vehicle driving-related costs are transmitted to the mobile terminal 200 through a payment push. The payment push does not request a separate manipulation (e.g., a payment password input, etc) for payment from the user, but is notification that payment has been performed by pre-designated payment means. If the user has objections to the payment processing, the user may subsequently submit the opinions through a separate objection process.

When vehicle driving-related costs occur, a push message is transmitted to the mobile terminal 200. When receiving the push message, the mobile terminal 200 requests whether an app has been normally authenticated by driving the app.

That is, an automatic payment process is performed on the vehicle driving-related costs according to procedures of transmitting the push message, driving the app (app authentication), and checking payment approval.

The mobile terminal 200 executes the application, extracts a unique user ID (UUID), an app serial number, and a telephone number, etc., and transmits them to the server 100.

The UUID is a unique serial number that is provided to the application when the application is downloaded from an app provision server. The UUID is differently assigned to each person whenever the application is downloaded, and is stored in an operating system of the mobile terminal 200 not the app itself.

Accordingly, although the app is reproduced, the forgery and falsification of the app can be prevented because it is impossible to reproduce the UUID stored in the operating system.

The app serial number is a serial number that is assigned by the server 100 when the app is installed in the mobile terminal 200 and is authenticated. The app serial number is used to verify whether member information is identical with member information stored in a server 100.

When receiving information, such as the UUID, the app serial number, and the telephone number, from the mobile terminal 200, the server 100 identifies whether the user is a member and whether the app has been forged and falsified by comparing the information with member information that has been previously stored therein.

When the information received from the mobile terminal 200 is identical with the information stored in the server 100, the server 100 transmits, to the financial institution server 300, information on the vehicle driving-related costs so that the information is approved and processed.

The payment push may be transmitted at timing when the vehicle driving-related costs occur during driving, and may be transmitted after vehicle driving is terminated.

That is, if driving is performed while checking a terminal for navigation by using the mobile terminal 200, the payment push may cause user inconvenience, such as covering a navigation screen. Accordingly, the payment push may be transmitted after vehicle driving is terminated by identifying location information, checking a navigation termination manipulation situation, etc.

When the license plate number received from the mobile terminal 200 is recognized at a tollgate, etc., the server 100 generates driving-related payment information.

For example, if "12 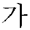 1234", that is, the license plate number received from the mobile terminal 200, enters Sunam Tollgate and exits from North Daejeon Tollgate, driving-related payment information for an expressway usage cost of 8,000 won is generated.

The server 100 processes payment for the driving-related payment information by using the pre-designated payment means through communication with a financial institution server 300. In this case, the server 100 identifies whether the application from which the push message has been received has been installed in the pre-registered mobile terminal 200, omits a user authentication procedure through a separate financial institution when it is identified that the application has been installed in the legitimate mobile terminal 200, and performs payment processing on the driving-related payment information by performing no-signature personal authentication.

If there is a problem with the pre-designated payment means, that is, if a credit card has been stopped or the balance of a direct payment card is smaller than costs for the driving-related payment information, the server 100 provides the mobile terminal 200 with a non-payment amount and guidance of a reason for non-payment processing in a push way.

That is, in the case of automatic payment, when the automatic payment is completed according to procedures of transmitting a push message, driving an app (app authentication), and checking payment approval, the server 100 transmits a push for the fact of the completion. In the case of non-payment, the server 100 transmits the fact that an unpaid fare has occurred and a push for a payment processing request.

According to an embodiment of the present disclosure, a prepayment service may also be provided in addition to the automatic payment for the driving-related payment information.

For example, when a user inputs a source (e.g., Yangjae 1-dong Community Center) and a destination (e.g., Daejeon Government Complex) to the mobile terminal, "a toll 7,700 won upon entering to Seoul Tollgate - exiting from Sintanjin Tollgate, a toll 800 won at Hanbat Tollgate, a total of 8,500 won", that is, driving-related payment information, is calculated.

The user requests prepayment for corresponding driving-related payment information by using the mobile terminal 200. The server 100 and the financial institution server 300 perform approval processing for the prepayment request.

The server 100 performs future settlement processing based on the results of the recognition of the license plate number, in relation to a passage history for which prepayment has been processed through the mobile terminal 200.

That is, the server 100 processes automatic payment approval to an excess through the pre-designated payment means when an actual road usage cost is greater than a prepayment-processed amount, performs cancellation processing on the prepayment history when the actual road usage cost is smaller than the prepayment-processed amount, and performs automatic payment approval processing on an actually occurred amount.

When the prepayment request is present, the server 100 and the financial institution server 300 may provide a discount having a preset percentage.

According to an embodiment of the present disclosure, it is possible to provide a refueling service as driving-related payment information in relation to the prepayment service.

The user requests to put "50,000 won of diesel" in the vehicle at "Yangjae 1-dong A gas station" by using the mobile terminal 200, and requests prepayment for the "50,000 won of diesel" by using the preset payment means.

The server 100 and the financial institution server 300 performs approval processing on the prepayment request, and transmits a corresponding approval history to a management server at "Yangjae 1-dong A gas station".

The management server recognizes the entry of the vehicle for which the prepayment approval has been processed by recognizing the license plate number of the vehicle, and sets a pump number based on prepayment approval-processed information so that refueling can be immediately performed.

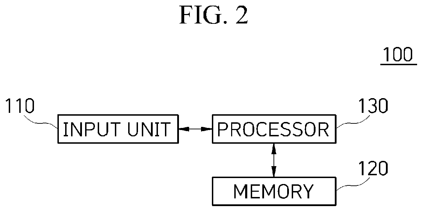

FIG. 2 illustrates the server 100 of the payment system related to vehicle driving according to an embodiment of the present disclosure.

The server 100 of the payment system related to vehicle driving according to an embodiment of the present disclosure transmits a payment push through an application of a mobile terminal by recognizing a vehicle, identifies whether the application has been installed in the pre-registered mobile terminal, and performs vehicle driving-related payment by performing no-signature personal authentication.

The server 100 includes an input unit 110 for receiving vehicle recognition information, a memory 120 in which a program for processing a payment process on vehicle driving-related costs based on the vehicle recognition information has been stored, and a processor 130 for executing the program. The processor 130 transmits a payment push for the vehicle driving-related costs through the application, identifies whether the application has been installed in the pre-registered mobile terminal, and processes a payment process for the vehicle driving-related costs through no-signature personal authentication.

When personal identification using the mobile terminal and personal identification for payment means are completed, the processor 130 registers the license plate number.

When the vehicle driving-related costs occur, the processor 130 processes an automatic payment process by using the payment means, and transmits a payment-related push to the mobile terminal.

In this case, the processor 130 transmits a push message to the mobile terminal as described above, performs verification (performs verification by using a telephone number, a UUID, or an app serial number in order to identify whether an app has been normally authenticated) by driving the app installed in the mobile terminal, and transmits a push for the completion of the payment to the mobile terminal when automatic approval is completed by checking the contents of payment approval.

If payment using payment means that has been previously registered has not been completed with respect to the vehicle driving-related costs, the processor 130 transmits a non-payment-related push to the mobile terminal.

In transmitting the push message to the mobile terminal, the processor 130 checks a driving completion state and then transmits the push message.

When a prepayment request is received through the mobile terminal, the processor 130 calculates vehicle driving-related costs that are expected based on path information, and performs prepayment processing. In this case, the processor 130 performs the prepayment processing on the results of a discount rate having a preset ratio, which has been applied to the vehicle driving-related costs.

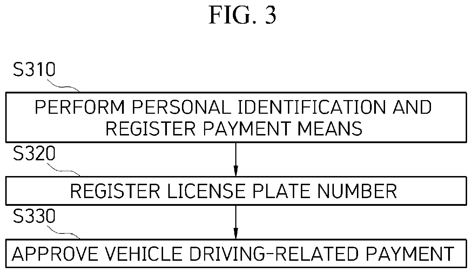

FIG. 3 illustrates a payment method related to vehicle driving according to an embodiment of the present disclosure.

The payment method related to vehicle driving according to an embodiment of the present disclosure includes step S310 for personal identification and the registration of payment means, step S320 of registering a license plate number, and step S330 of approving vehicle driving-related payment.

In step S310, personal identification for a user who asks for a vehicle driving-related payment service and personal identification for payment means are performed through processes for personal identification using a mobile terminal and personal identification for the payment means.

Step S320 is a step of registering a license plate number that asks for the vehicle driving-related payment service. The user may register a plurality of license plate numbers.

Step S330 is a step of processing vehicle driving-related payment approval. If a pre-registered license plate number is recognized by using a camera disposed at a tollgate, for example, a paid road usage costs according to a driving path is calculated as vehicle driving-related costs. Automatic payment for the vehicle driving-related costs is processed by using the pre-registered payment means.

In step S330, after the automatic payment is processed, a payment push is transmitted to the mobile terminal.

In step S330, the cost according to the driving path is calculated as the vehicle driving-related costs based on the recognition of the license plate number. A push message is transmitted to the mobile terminal, and an application is driven so that verification is performed on the application (verification using a telephone number, a UUID, an app serial number, etc.). After automatic payment is performed based on the check of the contents of payment approval, a push for the completion of the automatic payment is transmitted to the mobile terminal.

In step S330, if the automatic payment processing has not been completed (in the case of non-payment), a non-payment push including a reason for non-payment and a non-payment amount are transmitted to the mobile terminal.

In step S330, a driving path is searched for, and a resulting prepayment request is received. Prepayment processing for vehicle driving-related payment costs for an expected path is performed.

Meanwhile, the payment method related to vehicle driving according to an embodiment of the present disclosure may be implemented in a computer system or may be recorded on a recording medium. The computer system may include at least one processor, memory, a user input device, a data communication bus, a user output device, and a repository. Each of the aforementioned elements performs data communication through the data communication bus.

The computer system may further include a network interface coupled with a network. The processor may be a central processing unit (CPU) or may be a semiconductor device for processing an instruction stored in the memory and/or the repository.

The memory and the repository may include various forms of volatile or non-volatile storage media. For example, the memory may include ROM and RAM.

Accordingly, the payment method related to vehicle driving according to an embodiment of the present disclosure may be implemented as a computer-executable method. When the payment method related to vehicle driving according to an embodiment of the present disclosure is performed in a computer device, computer-readable instructions may perform the payment method according to the present disclosure.

Meanwhile, the aforementioned payment method related to vehicle driving according to the present disclosure may be implemented in a computer-readable recording medium in the form of computer-readable code. The computer-readable recording medium includes all types of recording devices in which data interpretable by a computer system is stored. For example, the computer-readable recording medium may include read only memory (ROM), random access memory (RAM), magnetic tapes, magnetic disks, flash memory, and optical data storages. Furthermore, the computer-readable recording medium may be distributed to computer systems connected over a computer communication network, and may be stored and executed in the form of a code readable in a distributed manner.

The embodiments of the present disclosure have been described so far. A person having ordinary knowledge in the art to which the present invention pertains will understand that the present invention may be implemented in a modified form without departing from an intrinsic characteristic of the present disclosure. Accordingly, the disclosed embodiments should be considered from a descriptive viewpoint, not from a limitative viewpoint. The range of the present disclosure is described in the claims not the aforementioned description, and all differences within an equivalent range thereof should be construed as being included in the present disclosure.

## Claims

1. A payment server related to vehicle driving, comprising:
an input unit configured to receive vehicle recognition information;
a memory in which a program for processing a payment of vehicle driving-related costs based on the vehicle recognition information has been stored; and
a processor configured to execute the program,
wherein the processor is configured to transmit a payment push for the vehicle driving-related costs, identify whether an application has been installed in a legitimate mobile terminal, and process a payment process for the vehicle driving-related costs.

2. The payment server of claim 1, wherein the processor processes the payment process by using pre-registered payment means through no-signature personal authentication.

3. The payment server of claim 1, wherein the processor registers a license plate number when personal identification using the mobile terminal and personal identification for the payment means are completed.

4. The payment server of claim 1, wherein the processor transmits the payment push after checking a driving completion state.

5. The payment server of claim 1, wherein the processor calculates expected costs when receiving a prepayment request through the mobile terminal and performs prepayment processing.

6. The payment server of claim 5, wherein the processor calculates the expected costs by applying a pre-set discount rate in response to the prepayment request.

7. A method related to vehicle driving, comprising:
(a) performing personal identification using a mobile terminal and personal identification for a registration of payment means;
(b) performing a registration of a license plate number; and
(c) when the license plate number registered at step (b) is recognized and vehicle driving-related costs occurs, performing automatic payment by using the pre-registered payment means.

8. The payment method of claim 7, wherein the step (c) comprises:
calculating costs according to a driving path as the vehicle driving-related costs based on the recognition of the license plate number,
transmitting a push message to the mobile terminal and driving an application so that verification for the application is performed,
performing automatic payment based on a check of contents of payment approval, and
then transmits a push for a completion of the automatic payment to the mobile terminal.

9. The payment method of claim 7, wherein the step (c) comprises transmitting, to the mobile terminal, a non-payment push comprising information on a reason for non-payment and a non-payment amount when the automatic payment fails.

10. The payment method of claim 7, wherein the step (c) comprises:
when receiving a prepayment request according to search for a driving path, calculating the vehicle driving-related costs by applying a pre-set discount rate, and
performing approval processing on the prepayment request by using the pre-registered payment means.
